Europäisches Patentamt

European Patent Office

Office européen des brevets

(19)

(11) Veröffentlichungsnummer: **0 286 580**
**A2**

(12) # EUROPÄISCHE PATENTANMELDUNG

(21) Anmeldenummer: 88730079.6

(22) Anmeldetag: 30.03.88

(51) Int. Cl.⁴: **G 01 K 17/00**

(30) Priorität: 04.04.87 DE 3711425
19.06.87 DE 3720340

(43) Veröffentlichungstag der Anmeldung:
**12.10.88 Patentblatt 88/41**

(84) Benannte Vertragsstaaten:
**AT BE CH DE ES FR GB GR IT LI LU NL SE**

(71) Anmelder: **Lessing, Helmut, Dr.**
**Graf-Zeppelin-Strasse 86**
**D-3203 Sarstedt (DE)**

(72) Erfinder: **Lessing, Helmut, Dr.**
**Graf-Zeppelin-Strasse 86**
**D-3203 Sarstedt (DE)**

(74) Vertreter: **Thömen, Uwe, Dipl.-Ing.**
**Patentanwalt U. Thömen Zeppelinstrasse 5**
**D-3000 Hannover 1 (DE)**

(54) **Kalorimeter und Verfahren zur Bestimmung der Wärmeabgabe bei einer Reaktion mittels eines Kalorimeters.**

(57) Kalorimeter zur Messung der Reaktionswärme bei biologischen, chemischen oder physikalischen Reaktionen. Das Kalorimeter besitzt einen Reaktionsraum, in welchem die Reaktionswärme entsteht, sowie eine Temperaturmeßvorrichtung zur Messung der abfließenden Reaktionswärme. Der Reaktionsraum ist mit temperaturstabilem Medium, z.B. Eiswasser oder verdampfendes Kohlendioxid umgeben. Als Meßvorrichtung wird ein Thermoelement verwendet, dessen erste Lötstelle an der Außenwandung des Reaktionsraumes angeordnet ist, und dessen zweite Lötstelle sich im Eiswasser befindet.

EP 0 286 580 A2

Bundesdruckerei Berlin

# Beschreibung

## Kalorimeter und Verfahren zur Bestimmung der Wärmeabgabe bei einer Reaktion mittels eines Kalorimeters

Die Erfindung betrifft ein Kalorimeter gemäß dem Oberbegriff des Patentanspruchs 1. Außerdem bezieht sich die Erfindung mit einem Verfahren zur Bestimmung der Wärmeabgabe bei einer Reaktion von Proben mittels eines Kalorimeters.

Kalorimeter werden bekanntlich verwendet, um den spezifischen Energiegehalt von Substanzen zu bestimmen, oder auch um Reaktionswärme empirisch zu ermitteln. Im Bereich der Lebensmittelindustrie besitzen die Kalorimeter beispielsweise eine erheb liche Bedeutung, weil bei den angebotenen Produkten häufig der Verbrennungswert (Kcal/g oder KJoule/g) angegeben wird. Hier stellt ein Kalorimeter ein unerläßliches Hilfsmittel dar, un den Kaloriengehalt bzw. den spezifischen Energiegehalt meßtechnisch zu erfassen.

Der somit insgesamt erheblichen Bedeutung der üblichen Kalorimeter stehen in der Praxis allerdings gravierende Nachteile entgegen, die vor allem wirtschaftliche Aspekte sowie die Zeitdauer einer durchzuführenden Messung betreffen. Üblicherweise wird ein Kalorimeter etwa in Form der sogenannten Phillipson-Bombe verwendet, wie sie durch die Literaturstelle "Calorimetry and Body Composition" von T. Prus, IB-Handbook No. 24, Methods of Ecological Bioenergetics, London, 1978, bekannt geworden ist.

Mit der Phillipson-Bombe lassen sich zwar zuverlässige Meßwerte erzielen, allerdings erfordert die Durchführung der Messung einen erheblichen Aufwand im Hinblick auf die erforderliche Zeit sowie auf die äußeren Meßbedingungen, und außerdem ist die Phillipson-Bombe in der Anschaffung und im Betrieb sehr teuer. Diese Faktoren führen insgesamt zu einem beschränkten Anwendungsbereich dieses Kalorimeters.

Bei dem bekannten Kalorimeter befindet sich - ebenso wie bei anderen bekannten Kalorimetern - innerhalb eines druckfesten Verbrennungsraumes, der als Bombe bezeichnet wird, die Probe, deren Energiegehalt bestimmt werden soll. Die Probe wird gezündet, und es wird dann die beim Verbrennen abgegebene Wärme gemessen, und über diese der Energiegehalt ermittelt. Die Wärmemessung ist die wichtigste Aufgabe bei dem Kalorimeter.

Die den Verbrennungsraum beinhaltende Bombe ist auf einen ersten Aluminiumblock aufgesetzt, der seinerseits über ein Peltier-Element mit einem zweiten unteren Aluminiumblock (Referenzblock) in Verbindung steht.

Der erste Aluminiumblock, der in wärmeleitender Verbindung mit der Bombe steht, erwärmt sich durch die bei der Verbrennung der Probe entstehende Wärme auf eine erste Temperatur, und der zweite Aluminiumblock, also der Referenzblock, wird durch externe Beeinflussung auf eine konstante Referenztemperatur (zweite Temperatur) gehalten, das ist üblicherweise die umgebende Raumtemperatur. Mit dem Peltier-Element läßt sich aufgrund der unterschiedlichen Temperaturen der beiden Aluminiumblöcke nun eine Spannung erzeugen, die ein Maß für die Temperatur des oberen Aluminiumblockes darstellt, und die zur Auswertung herangezogen wird.

Das bekannte Prinzip der Phillipson-Bombe besteht also darin, zunächst eine konstante Referenztemperatur zu schaffen und dann die durch die Verbrennung der Probe erzeugte Wärme aus der Temperaturänderung gegen diese Referenztemperatur zu bestimmen. Dies ist in der Praxis allerdings mit einem erheblichen Aufwand verbunden.

Zunächst stellt der Aufbau mit den beiden Aluminiumblöcken einen erheblichen Aufwand dar. Gravierender ist aber noch die Notwendigkeit, den zweiten Aluminiumblock auf eine konstante Temperatur zu halten. Zu diesem Zweck muß die Temperatur des Raumes, in welchem sich die Meßanordnung befindet, mit großem regelungstechnischem Aufwand konstant gehalten werden. Bei Abweichungen dauert es erfahrungsgemäß wieder sehr lange, bis die gewünschte konstante Temperatur erreicht ist. Die Messungen mit der Phillipson-Bombe erfordern daher einen großen Zeitaufwand und sind mit erheblichen Kosten verbunden, so daß die Anwendung auf professionelle Zwecke in Großlabors be schränkt ist.

Der Erfindung liegt die Aufgabe zugrunde, ein Kalorimeter zu schaffen, welches einfach im Aufbau ist und schnelle Messungen ermöglicht, und zusätzlich eine hohe Genauigkeit besitzt.

Dieses Ziel erreicht die Erfindung bei dem im Oberbegriff des Anspruchs 1 genannten Kalorimeter durch die im kennzeichnenden Teil angegebenen Merkmale.

Ferner soll durch die Erfindung ein Verfahren zur schnellen und kostengünstigen, gleichwohl jedoch genauen Messung von Reaktionswärme geschaffen werden, und diese Aufgabe wird durch die Merkmale des Anspruchs 16 gelöst.

Durch die Maßnahme, den Reaktionsraum mit einem temperaturstabilisierten Medium zu umgeben, läßt sich das Kalorimeter in vorteilhafter Weise besonders einfach und kostengünstig aufbauen, und weiterhin besteht der Vorteil, daß die erforderliche Temperaturmessung innerhalb kurzer Zeit durchgeführt werden kann. Es ist kein großer regelungstechnischer Aufwand für eine Raumtemparaturstabilisierung mehr erforderlich, so daß das neue Kalorimeter problemlos an beliebigen Orten einsetzbar ist. Wegen des einfachen raumsparenden Aufbaues ist das Kalorimeter auch ohne weiteres mobil und leicht transportierbar.

Als temperaturstabilisiertes Medium wird in zweckmäßiger Ausgestaltung der Erfindung eine Flüssigkeit im Zustand der Änderung ihres Aggregatzustandes gebildet, beispielsweise Eiswasser.

Die Erfindung nutzt die Erkenntnis aus, daß eine Flüssigkeit bei Änderung ihres Aggregatzustandes hinsichtlich der Temperatur äußerst stabil ist. Wenn der Reaktionsraum mit Eiswasser umgeben wird, bildet dessen Temperatur die weiter oben erwähnte Referenztemperatur, so daß sich die Verbrennungswärme in einer weiteren zweckmäßigen Ausgestaltung der Erfindung einfach mit einem Thermoelement bestimmen läßt, welches zwei Lötstellen besitzt. Die eine Lötstelle nimmt dabei die Temperatur des Eiswassers an, und die andere Lötstelle erwärmt sich auf eine der Wärmeabgabe bei der Reaktion innerhalb des Reaktionsraumes entsprechenden Temperatur. Bei einfachem und sehr handlichem Aufbau des Kalorimeters stehen somit in kurzer Zeit Meßwerte zur Verfügung.

Mit dem erfindungsgemäßen Kalorimeter lassen sich nicht nur Proben verbrennen, vielmehr ist ohne weiteres auch die Bestimmung der Energieabgabe bei Reaktionen von gasförmigen Stoffen möglich.

Der Reaktionsraum ist in zweckmäßiger Ausgestaltung der Erfindung durch einen druckstabilen Behälter gebildet, dessen Öffnung durch einen Verschlußdeckel verschließbar ist. Die Verwendung eines Glasbehälters ermöglicht es, die Verbrennung der Probe von Außen zu beobachten.

Durch den Verschlußdeckel sind ein Zuleitungsrohr und ein Ableitungsrohr geführt, um den Reaktionsraum spülen zu können, bzw. um bei unzulässigem Überdruck über das Ableitungsrohr mit einem Überdruckventil eine Sicherheitsmaßnahme zu schaffen. Im Falle der Energiebestimmung bei gasförmigen Stoffen können diese durch das Zuleitungsrohr in den Reaktionsraum geführt werden.

Weitere zweckmäßige Ausgestaltungen und vorteilhafte Weiterbildungen der Erfindung sind in den Unteransprüchen angegeben und der Beschreibung und der Zeichnung zu entnehmen.

Nachfolgend wird die Erfindung anhand des in der Zeichnung dargestellten Ausführungsbeispiels näher erläutert. Es zeigt:

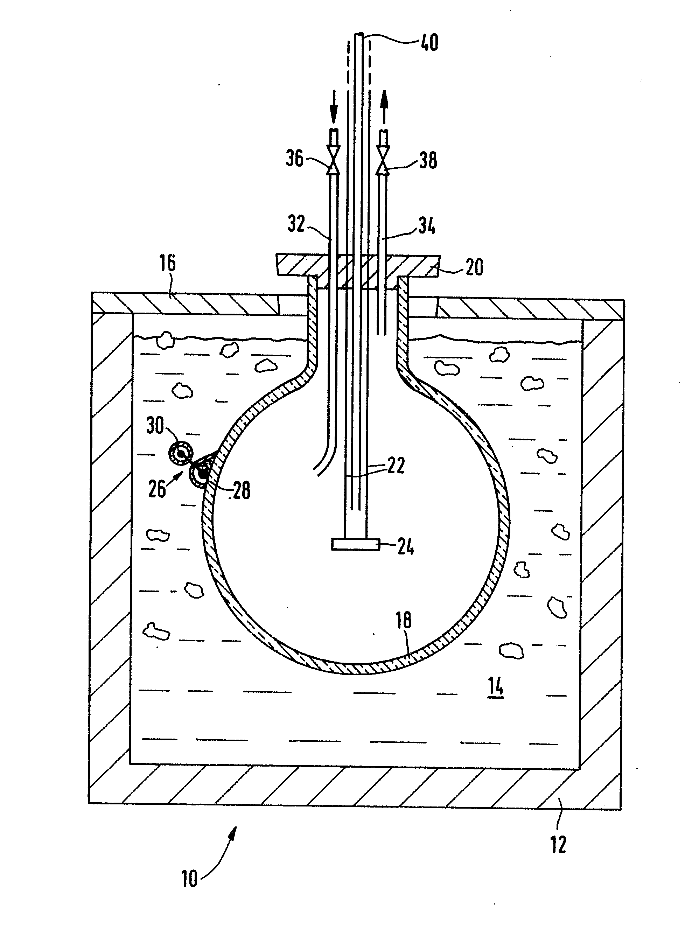

Fig. 1 eine schematische Querschnittsansicht eines Kalorimeters.

Das zeichnerisch dargestellte Kalorimeter 10 ist von einem wasserdicht ausgebildeten äußeren isolierten Behälter 12 aus Styropor umgeben. Der Behälter 12 ist mit Eiswasser 14 gefüllt, und in das Eiswasser 14 wird ein als Reaktionsraum dienender Glasbehälter 18 eingetaucht, so daß der Reaktionsraum von dem Eiswasser 14 umgeben ist. Zum Abschluß des isolierten Behälters 12 ist ein Deckel 16 vorgesehen.

Der Glasbehälter 18 besitzt zum Verschließen des Reaktionsraumes einen Verschlußdeckel 20, durch den Zündelektroden 22, ein Zuleitungsrohr 32 und ein Ableitungsrohr 34 geführt sind. Über das Zuleitungsrohr 32 mit einem Rückschlagventil 36 kann Gas zur Spülung des Glasbehälters bei vorgewählten Drücken zugeführt werden. Zur Sicherheit befindet sich am oberen Ende des Ableitungsrohres 34 ein Überdruckventil 38.

Die beiden Zündelektroden 22 tragen an ihren unteren Enden eine Probenplatte 24, auf welche die zu untersuchende Probe aufgebracht wird. Für den Fall, daß gasförmige Medien untersucht werden sollen, kann durch den Verschlußdeckel 20 ein weiteres mit der Ziffer 40 bezeichnetes Rohr für die Zuleitung des Gases geführt werden. Die Zündelektroden 22 werden an eine nicht dargestellte Spannungsquelle angeschlossen.

An der Außenwandung des Glasbehälters 18 ist ein Thermoelement 26 durch Verkleben befestigt. Das Thermoelement 26 besitzt eine erste Lötstelle 28 und eine zweite Lötstelle 30. Örtlich gesehen befindet sich das Thermoelement 26 an einer solchen Stelle, an der die bei der Verbrennung der Probe auftretende Wärmestrahlung unter einem optimalen Winkel auf die Innenseite des Glasbehälters 18 (Temperaturmeßstelle) trifft, und die außerdem durch Konvektion und Wärmeleitung optimal erreicht wird.

Die erste Lötstelle 28 befindet sich direkt auf der Außenwandung des Glasbehälters 18 und ist gegenüber dem Eiswasser wärmeisolierend und elektrisch isolierend abgeschirmt.

Die zweite Lötstelle 30 befindet sich direkt innerhalb des Eiswasser 14, um dessen Temperatur anzunehmen. Zur sicheren Wirkungsweise ist die zweite Lötstelle 30 elektrisch gegenüber dem Eiswasser 14 isoliert. Die von dem Thermoelement 26 erzeugte Spannung wird über nicht dargestellte Leitungen in an sich bekannter Weise einem Spannungsmesser zugeführt. Einfacher wie bei der bekannten Phillipsen-Bombe kann mit Hilfe der Spannungswerte der Energiegehalt einer Probe bestimmt werden.

Dadurch, daß der Glasbehälter 18 bzw. der Reaktionsraum von Eiswasser umgeben ist, kann die Reaktionswärme gegen die Temperatur des Eiswassers gemessen werden, wobei der Temperaturanstieg am Meßpunkt der ersten Lötstelle 28 und der Abfall ungewöhnlich schnell erfolgen, so daß der üblicherweise zu berücksichtigende Fehler durch Wärmeverluste vor dem Erreichen des Maximalwertes unerheblich wird. Bei bekannten Kalorimetern tritt diese Erscheinung demgegenüber nicht auf.

In der Praxis hat sich gezeigt, daß die erzielten Meßwerte, die sehr schnell beispielsweise innerhalb von 10 Minuten erzielt werden, überaus genau und damit den Meßwerten bei der Phillipson-Bombe vergleichbar sind.

Es ist hervorzuheben, daß diese schnellen und genauen Messungen bei einfachem, kostengünstigem Aufbau des neuen Kalorimeters erreicht werden. Die Bestimmung der Reaktionswärme erfolgt durch Auswertung der Temperaturdifferenz am Thermoelement 26, die sich in Folge des Wärmestaus an der Oberfläche des Glasbehälters 18 zwischen der ersten Lötstelle 28 und der zweiten Lötstelle 30 ergibt. Wegen des temperaturstabilen Eiswassers 14 wird dabei mit geringem apparativem Aufwand gegen eine extrem stabile Referenztemperatur gemessen.

**Patentansprüche**

1. Kalorimeter mit einem Reaktionsraum zur Bestimmung von Reaktionswärme, mit einer Temperaturmeßvorrichtung zur Messung der abfließenden Reaktionswärme, und mit einer Zündvorrichtung zum Einleiten der Reaktion, insbesondere Kalorimeter mit einem Reaktionsraum zur Verbrennung einer Probe, dadurch gekennzeichnet, daß der Reaktionsraum (18) von einem temperaturstabilisierten Medium (14) umgeben ist.

2. Kalorimeter nach Anspruch 1, dadurch gekennzeichnet, daß das temperaturstabilisierte Medium eine Flüssigkeit ist, die sich im Zustand der Änderung ihres Aggregatzustandes befindet.

3. Kalorimeter nach Anspruch 1 und/oder 2 dadurch gekennzeichnet, daß das temperaturstabilisierte Medium Eiswasser ist.

4. Kalorimeter nach Anspruch 1 - 3, dadurch gekennzeichnet, daß die Temperaturmeßvorrichtung durch mindestens ein Thermoelement (26) mit zwei Lötstellen (28, 30) gebildet ist.

5. Kalorimeter nach Anspruch 4, dadurch gekennzeichnet, daß die erste Lötstelle (28) auf der Außenwand des Reaktionsraumes (18) befestigt und gegen das umgebende Medium (14) sowohl elektrisch isoliert als auch wärmeisoliert ist.

6. Kalorimeter nach Anspruch 4 und/oder 5, dadurch gekennzeichnet, daß sich die zweite Lötstelle (30) in dem temperaturstabilisierten Medium (14) befindet und elektrisch dagegen isoliert ist.

7. Kalorimeter nach einem der Ansprüche 4 - 6, dadurch gekennzeichnet, daß die erste Lötstelle (28) an einer solchen örtlichen Stelle befestigt ist, an der die bei der Reaktion entstehende Wärme durch Strahlung und/oder Leitung und/oder Konvektion meßbar ist.

8. Kalorimeter nach den vorhergehenden Ansprüchen 1 - 7, dadurch gekennzeichnet daß der Reaktionsraum durch einen druckstabilen Glasbehälter (18) mit einer durch einen Verschlußdeckel (20) verschließbaren Öffnung gebildet ist.

9. Kalorimeter nach Anspruch 8, dadurch gekennzeichnet, daß durch den Verschlußdeckel (20) ein mit einem Rückschalgventil (36) versehenes Zuleitungsrohr (32) und ein verschließbares Ableitungsrohr (34) geführt sind.

10. Kalorimeter nach Anspruch 9, dadurch gekennzeichnet, daß Zuleitungsrohr (32) an einer dem Reaktionsort abgewandten Stelle endet, so daß der Reaktionsraum (18) vollständig gespült wird, ohne die Probe zu beeinflussen.

11. Kalorimeter nach Anspruch 1, dadurch gekennzeichnet, daß die Zündvorrichtung zwei durch den Verschlußdeckel (20) geführte Zündelektroden (22) umfaßt, die eine Probenplatte (24) halten.

12. Kalorimeter nach Anspruch 9, dadurch gekennzeichnet, daß dem Reaktionsraum (18) ein Überdruckventil (38) zugeordnet ist.

13. Kalorimeter nach einem der vorhergehenden Ansprüche 1 - 12, gekennzeichnet durch einen isolierten Behälter (12) für das temperaturstabilisierte Medium (14).

14. Kalorimeter nach Anspruch 13, dadurch gekennzeichnet, daß die Isolierung des Behälters (12) durch Schaumstoff gebildet ist.

15. Kalorimeter nach einem der vorhergehenden Ansprüche 8 - 14, dadurch gekennzeichnet, daß durch den Verschlußdeckel (20) eine absperrbare Zuleitung (40) für die Zufuhr definierter Mengen von zu untersuchenden Gasen in die Mitte des Reaktionsraumes (18) geführt ist.

16. Verfahren zur Bestimmung der Wärmeabgabe bei einer Reaktion mittels eines Kalorimeters durch Messung der Reaktionswärme, insbesondere durch Messung der bei einer Verbrennung einer Probe in einem Reaktionsraum entstehenden Reaktionswärme, dadurch gekennzeichnet, daß der Reaktionsraum (18) von einem temperaturstabilisiertem Medium umgeben wird, und daß die Temperaturdifferenz aus der einen, durch Wärmestau an der Wandung des Reaktionsraumes (18) entstehenden Temperatur und der anderen Referenztemperatur im temperaturstabilisierten Medium (14) gemessen wird.

0286580

509/2